# EUROPEAN PATENT SPECIFICATION

(11) **EP 2 780 563 B1**
(45) Date of publication and mention of the grant of the patent: **24.07.2019**
(21) Application number: 12849291.5
(22) Date of filing: 13.11.2012
(51) Int. Cl.: F01N 11/00, F01N 3/021

(54) **METHOD AND SYSTEM PERTAINING TO MONITORING PARTICLE EMISSIONS IN COMBUSTION ENGINE EXHAUSTS**
VERFAHREN UND SYSTEM IM ZUSAMMENHANG MIT DER ÜBERWACHUNG VON PARTIKELEMISSIONEN IN VERBRENNUNGSMOTORABGASEN
PROCÉDÉ ET SYSTÈME CONCERNANT LA SURVEILLANCE DES ÉMISSIONS DE PARTICULE DANS LES GAZ D'ÉCHAPPEMENT DE MOTEUR À COMBUSTION

(30) Priority: 14.11.2011 SE 1151073
(43) Date of publication of application: 24.09.2014
(73) Proprietor: Scania CV AB, 151 87 Södertälje (SE)
(72) Inventor: STENLÅÅS, Ola, S-151 48 Södertälje (SE)
(74) Representative: Scania CV AB
(86) International application number: PCT/SE2012/051240
(87) International publication number: WO 2013/074022

(56) References cited:
- EP-A1- 2 236 786
- EP-A2- 1 746 276
- EP-B1- 1 739 291
- DE-A1-102005 016 132
- US-A1- 2001 013 220
- US-A1- 2007 137 177
- US-A1- 2008 307 770

## Description

### Field of the invention

The present invention relates to exhaust cleaning and in particular to a method for determining a particle content in an exhaust flow according to the preamble of claim 1. The invention relates also to a system and a vehicle, and to a computer programme and a computer programme product, which implement the method according to the invention.

### Background to the invention

Growing official concern about pollution and air quality, especially in major urban areas, has led to the adoption of emission standards and requirements in many jurisdictions.

Such emission standards often set requirements which define acceptable limits for exhaust emissions from vehicles equipped with combustion engines. These standards often regulate, for example, levels for emissions of nitrogen oxides (NOₓ), hydrocarbons (HC) and carbon monoxide (CO). These emission requirements also usually cover, for at least certain kinds of vehicle, the presence of particles in exhaust emissions.

These regulations are often organised in such a way that increasingly stringent emission level requirements are introduced at intervals of one or a few years. The endeavour to meet these requirements has therefore led to the development of systems for post-treatment (cleaning) of the exhaust gases which are formed during combustion in combustion engines.

These post-treatment systems often comprise some form of catalytic cleaning process whereby one or more catalysts are used to clean the exhaust gases. Such post-treatment systems often comprise other components as alternatives to, or in combination with, the one or more catalysts, e.g. post-treatment systems on vehicles with diesel engines often comprise particle filters.

Soot particles are formed during combustion of fuel in the combustion chambers (e.g. cylinders) of a combustion engine. As above, these soot particles are likewise subject to emission requirements and standards, which may entail using particle filters to intercept the soot particles. In such cases the exhaust flow is for example led through a filter structure whereby soot particles are captured from the passing exhaust flow in order to be stored in the particle filter.

There are various methods for reducing emissions from a combustion engine. As well as requirements concerning emission levels, it is also becoming increasingly common for there to be statutory requirements for vehicles to have internal diagnostic systems, so-called OBD (on-board diagnostics) systems to ensure that not only at for example the time of visits to workshops but also in day-to-day operation vehicles actually meet established requirements concerning emissions. In the case of particle emissions this may for example be achieved by means of a particle sensor, referred to in the description and claims set out below as a PM (particulate matter, particulate mass) sensor, situated in the tailpipe of the exhaust system to measure the particle content of the exhaust flow before it is released into the vehicle's surroundings.

Post-treatment systems with particle filters can be very effective and the resulting particle content after the exhaust flow has passed through the vehicle's post-treatment system is often low when the system is fully functional. This also means that the signals which the sensor delivers will indicate low or no particle emission.

EP 1 746 276 A2 discloses a method where a predicted emission is determined from an engine model and compared with a measured emission.

US 2007/137177 A1 discloses an onboard diagnostics system for monitoring engine emissions.

### Summary of the invention

An object of the invention is to propose a method for diagnosis of a combustion engine pertaining to a vehicle. This object is achieved with a method according to claim 1.

The present invention proposes a method for diagnosis of a combustion engine whereby a post-treatment system comprising at least one particle filter is provided to post-treat an exhaust flow arising from combustion in said engine. The method comprises
- using a PM sensor situated upstream of said particle filter to determine, at a location upstream of said particle filter, a first particle content in said exhaust flow arising from said engine, and
- using said first particle content determined to determine whether the particle content of said exhaust flow downstream of said particle filter fulfils a first condition.

By determining a particle content at a location upstream of said particle filter and then using this particle content as a basis for determining whether the particle content downstream of the filter fulfils a first condition, e.g. being less than a second particle content, it is for example possible to determine whether the particle content in the exhaust flow released after said the filter into the engine's surroundings, e.g. the surroundings of a vehicle, is within prescribed requirements. These requirements may for example take the form of a maximum permissible particle content defined for example as particle mass per unit engine power output, e.g. a certain particle mass per kW of developed or deliverable power output, and said condition may also take the form of the particle content released having to meet the requirements. Said second particle content may for example be set at a level which just meets the requirements or meets them with a desired margin. As explained below, the condition, e.g. the second particle content, may also be set at a higher level than the requirements.

As below, the invention affords the further advantage that problems in ensuring the reliability of the sensor in sensor solutions of the kind described above can be reduced and that an improved method for determining particle emissions from combustion in a combustion engine can be achieved.

In one embodiment the engine may itself meet prevailing requirements in that the particle content in said exhaust flow downstream of said particle filter may be arranged to fulfil said first condition if said first particle content determined fulfils said first condition. In another embodiment the particle filter of said exhaust flow downstream of said particle filter may be such as to fulfil said first condition if said first particle content determined conforms to a specific ratio to said maximum permissible particle emission, e.g. by being not more than said maximum permissible particle emission multiplied by some appropriate factor.

In one embodiment, said first condition depends on a differential pressure across the particle filter, e.g. in that a condition in the form of a particle content may depend on the differential pressure so that the maximum level which said first particle content may reach can be arranged to decrease in step with increasing differential pressure.

The present invention affords also the advantage that the PM sensor, owing to the higher particle content of the exhaust flow upstream of the particle filter, will more frequently or more or less regularly deliver a signal which indicates that there is soot in the exhaust flow. The signal will thus also be significantly more reliable and therefore also easier to diagnose. Unlike sensor location downstream of the particle filter as above, it is for example possible for a suddenly omitted signal to be analysed immediately and serve for example as an indication that the sensor is malfunctioning. Locating the PM sensor upstream affords the further advantage that it can with greater certainty be so located as to have passing it a well-mixed and homogeneous exhaust flow without substantial distribution problems, potentially also providing assurance of measured values which are more correct.

Thus the present invention makes it possible to monitor that requirements with regard to particle emission after the particle filter are met without having to conduct actual measurement of the particle content after the particle filter, even in the case of engines whose particle content in the exhaust flow upstream of the filter does not meet prevailing requirements.

Further characteristics of the present invention and advantages thereof are indicated by the detailed description of embodiment examples set out below and the attached drawings.

### Brief description of drawings

- Fig. 1a: depicts schematically a vehicle on which the present invention may be employed.
- Fig. 1b: depicts a control unit in the control system for the vehicle depicted in Fig. 1.
- Fig. 2: depicts the post-treatment system in more detail for the vehicle depicted in Fig. 1.
- Fig. 3: depicts an example of a method according to the present invention.

### Detailed description of embodiments

The expression "particle content" in the description and claims set out below comprises both content in the form of unit weight and content/concentration, i.e. the unit number of particles. Moreover, the unit may be any suitable unit and the content may be expressed as, for example, weight or number of particles per unit volume, per unit time, per work performed or per distance travelled by the vehicle.

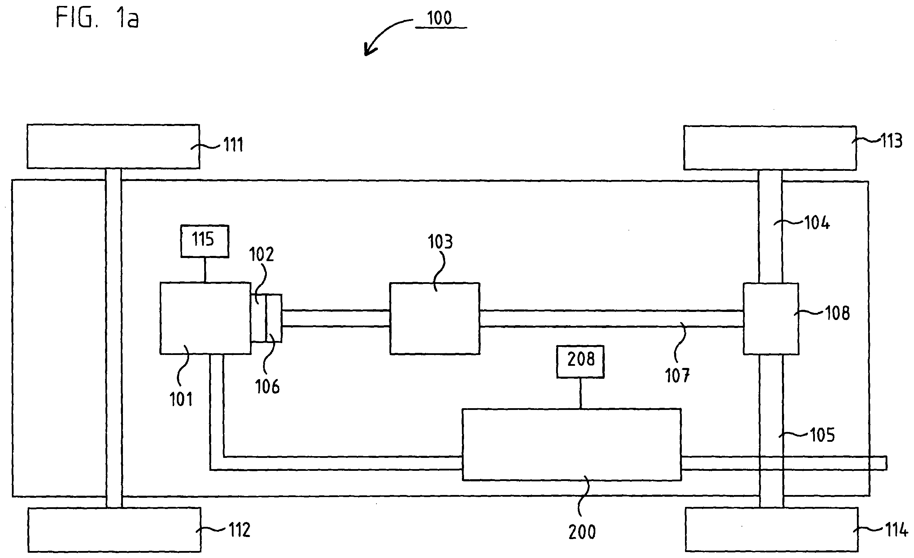

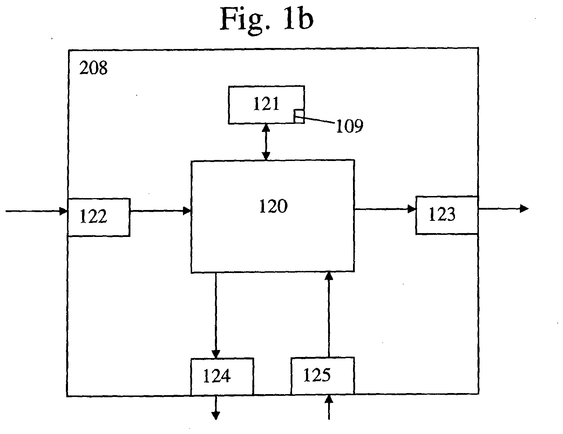

Fig. 1a depicts a power train of a vehicle 100 according to an embodiment of the present invention. The vehicle schematically depicted in Fig. 1 has only one axle provided with tractive wheels 113, 114 but the invention is also applicable on vehicles in which more than one axle is provided with tractive wheels. The power train comprises a combustion engine 101 which is connected in a conventional way, via an output shaft of the engine, usually via a flywheel 102, to a gearbox 103 via a clutch 106. The engine is controlled by the vehicle's control system via a control unit 115. The clutch 106, which may for example take the form of an automatically controlled clutch, and the gearbox 103 are also controlled by the vehicle's control system by means of one or more suitable control units (not depicted). The vehicle's power train may of course also be of some other kind, e.g. a type with conventional automatic gearbox etc.

An output shaft 107 from the gearbox 103 then drives the tractive wheels 113, 114 via a final gear 108, e.g. a conventional differential, and driveshafts 104, 105 which are connected to said final gear 108.

The vehicle 100 further comprises a post-treatment system (exhaust cleaning system) 200 for treatment (cleaning) of exhaust emissions arising from combustion in the engine's combustion chambers (e.g. cylinders).

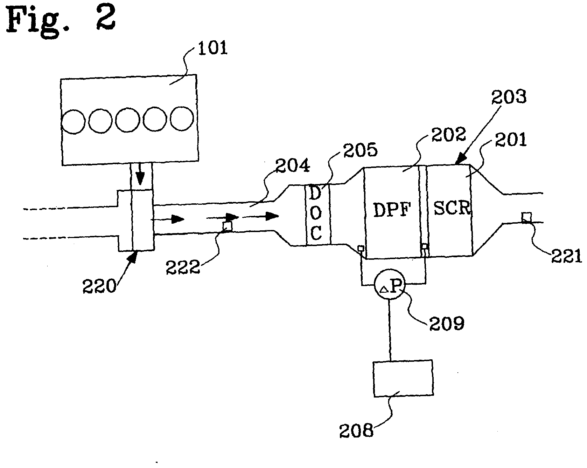

The post-treatment system is depicted in more detail in Fig. 2, showing the vehicle's engine 101 from which the exhaust gases (the exhaust flow) generated by the combustion are led through a turbo unit 220. In turbo engines the exhaust flow arising from the combustion often drives a turbo unit which itself compresses the incoming air for the combustion in the cylinders. Alternatively, the turbo unit may for example be of compound type. The function of various kinds of turbo unit is well-known and is therefore not described in more detail here. The exhaust flow is then led via a pipe 204 (indicated by arrows) to a particle filter (diesel particulate filter, DPF) 202 via an oxidation catalyst (diesel oxidation catalyst, DOC) 205.

The oxidation catalyst DOC 205 has various functions and is normally used primarily to oxidise remaining hydrocarbons and carbon monoxide in the exhaust flow to carbon dioxide and water. The oxidation of hydrocarbons (i.e. oxidation of fuel) results also in the formation of heat which may be utilised to raise the temperature of the particle filter at the time of its emptying, its so-called regeneration. The oxidation catalyst may also be used to oxidise nitrogen monoxide (NO) to nitrogen dioxide (NO₂) which may be utilised in so-called passive regeneration.

Post-treatment systems of the type referred to may also comprise other components, e.g. a (single, in the present example) SCR (selective catalytic reduction) catalyst 201 situated downstream of the particle filter 202. SCR catalysts use ammonia (NH₃), or a compound from which ammonia can be generated/formed, as additive to reduce the amount of nitrogen oxides NOₓ.

Moreover, the post-treatment system 200 may also comprise more components than as exemplified above or, conversely, fewer components. It may for example comprise an ASC (ammonia slip catalyst) (not depicted) in addition to, or instead of, said DOC 205 and/or SCR 201. In the embodiment depicted, DOC 205, DPF 202 and also the SCR catalyst 201 are integrated in a combined exhaust cleaning unit 203, but it should be noted that DOC 205 and DPF 202 need not be integrated in a single exhaust cleaning unit, as they may be arranged in some other way deemed appropriate.

According to the present invention, the post-treatment system 200 comprises a PM sensor 222 situated upstream of DPF 202. This PM sensor, like other sensors associated with the post-treatment system, e.g. a pressure sensor 209, may deliver signals to a control unit 208, or some other suitable control unit, which controls or monitors the function of the post-treatment system. For example, the determination of appropriate times for regeneration of the particle filter may be done by the control unit 208 at least partly on the basis of signals from the pressure sensor 209 which measures the differential pressure across the filter. The fuller the filter becomes, the greater will be the pressure difference across it. The pressure sensor may for example also be used for diagnosis of DPF 202 but also when determining whether a particle content after the particle filter fulfils a condition according to the present invention, as described below.

Control systems in modern vehicles generally comprise a communication bus system consisting of one or more communication buses for connecting together a number of electronic control units (ECUs), e.g. the control units or controllers 115, 208, and various components located on the vehicle. Such a control system may comprise a large number of control units and the responsibility for a specific function may be shared by two or more of them.

For the sake of simplicity, only the control units 115, 208 appear in Fig. 1a.

In the embodiment depicted, the present invention is implemented in the control unit 208, which as above is responsible in the embodiment depicted for other functions in the post-treatment system, e.g. regeneration (emptying) of the particle filter 202, although the invention may equally well be implemented in a control unit dedicated to it, or wholly or partly in one or more other control units with which the vehicle is already provided, e.g. the engine control unit 115.

The function according to the present invention of the control unit 208 (or the control unit or units in which the present invention is implemented) will depend not only on signals from the PM sensor 222 but probably also on, for example, information received from, for example, the control unit or units which control engine functions, i.e. in the present example the control unit 115.

Control units of the type depicted are normally adapted to receiving sensor signals from various parts of the vehicle. The control unit 208 may for example receive sensor signals as above and also from the engine control unit 115 and other control units. Such control units are also usually adapted to delivering control signals to various parts and components of the vehicle, e.g. the control unit 208 may for example deliver signals to the engine control unit 115.

The control is often governed by programmed instructions, typically in the form of a computer programme which, when executed in a computer or control unit, causes the computer/control unit to effect desired forms of control action, e.g. method steps according to the present invention.

The computer programme usually forms part of a computer programme product which comprises a digital storage medium 121 (see Fig. 1b) with the computer programme 109 stored on it. Said digital storage medium 121 may for example take the form of any from among ROM (read-only memory), PROM (programmable read-only memory), EPROM (erasable PROM), flash memory, EEPROM (electrically erasable PROM), a hard disc unit etc., and be situated in or in communication with the control unit, in which case the computer programme is executed by the control unit. The vehicle's behaviour in a specific situation may thus be modified by altering the computer programme's instructions.

An example of a control unit (the control unit 208) depicted schematically in Fig. 1b may itself comprise a calculation unit 120 which may for example take the form of any suitable kind of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit needs for it to be able to perform calculations. The calculation unit is also arranged to store partial or final results of calculations in the memory unit 121.

The control unit is further provided with respective devices 122, 123, 124, 125 for receiving and sending input and output signals. These signals may comprise waveforms, pulses or other attributes which the input signal receiving devices 122, 125 can detect as information for processing by the calculation unit 120. The output signal sending devices 123, 124 are arranged to convert calculation results from the calculation unit 120 to output signals for conveying to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, an MOST (Media Oriented Systems Transport) bus or some other bus configuration, or a wireless connection.

As mentioned above, the combustion in the combustion chambers of the engine 101 results in the formation of particles which should not and in many cases are not permitted to be released into the vehicle's surroundings. The particles formed during combustion in, for example, a diesel engine consist largely of hydrocarbons, carbon (soot) and inorganic substances such as sulphur and ash. Soot particles may for example be formed when the fuel/air ratio during combustion in the engine's combustion chambers becomes too great, i.e. when there is a so-called "rich" fuel mixture with too high a proportion of fuel relative to that of air.

Although the fuel/air ratio for a specific combustion, i.e. the amounts of air and fuel injected during a specific piston stroke, may be such that the requirement for non-sooting combustion is met, the fuel/air ratio may still occur locally in parts of the combustion chamber where the proportion of fuel is higher and the mixture is thus richer, potentially giving rise to soot during combustion.

Soot may for example also be formed by oil splash from the engine's lubrication reaching the combustion chamber, e.g. via the movements of the piston. Metal fragments from wear and/or manufacture of the engine may for example give rise to particle formation. The vehicle's fuel may be more or less "clean" and thus itself give rise to sundry particle formation during combustion.

These soot particles are thus gathered up by the particle filter 202 by the exhaust flow being led through the filter structure, in which they are captured from the passing exhaust flow in order to be stored in the filter. A particle filter can usually separate a very large proportion of the particles present in the exhaust flow.

Statutory requirements have already been adopted in certain jurisdictions, and are expected in others, for vehicles to have their own systems, so-called OBD (on-board diagnostics) systems, making it possible to ensure that not only on the occasion for example of workshop visit checks but also in commercial operation the vehicle's particle emissions stay below prescribed levels.

This may be achieved in a relatively straightforward way by having a particle sensor (PM sensor) associated with the tailpipe of the post-treatment system, i.e. substantially at the location where the exhaust flow is released into the vehicle's surroundings. This location is indicated by ref. 221 in Fig. 2. By monitoring signals from the sensor 221, e.g. by means of a control unit corresponding to the control unit 208, it is possible to ensure that the particle content of the exhaust flow leaving the vehicle will also be below prescribed levels.

This sensor location does however have disadvantages. Particle capture from the exhaust flow by means of particle filters is usually so effective that the amount of particles actually leaving the vehicle is in general very small when the filter is fully functional.

This means that so long as the particle filter is working as intended it will be difficult to know whether the sensor is actually working, since the signals delivered by it will indicate very low or no particle contents. Experiments have shown that the particle contents of an exhaust flow after passing through a particle filter may be so low that in the case of many sensors it may take a long time (e.g. of the order of 5-15 minutes) before a signal indicating any particle presence at all is delivered.

This applies not only during normal running of the vehicle but also in cases of provocation, i.e. in situations where the engine is deliberately tested by being controlled in such a way that high particle contents should be delivered.

Thus it may be difficult to know whether the PM sensor 221 is actually healthy and working as expected, since signals from it which indicate low or no particle contents will at best be due to the post-treatment system being fully functional but might also be due to the sensor malfunctioning.

The location 221 indicated in Fig. 2 has the further disadvantage that at times when the filter malfunctions, e.g. because a mechanical fault suddenly occurs, causing a marked increase in particle emission, it is very difficult to predict how the exhaust flow path will change in such situations since, depending on the flow path, there will be no certainty that the sensor is so located that the raised particle contents will actually be detected.

This disadvantage may be mitigated by having after the particle filter, but still upstream of the PM sensor, a remixer to homogenise the exhaust flow and thereby increase the probability that raised particle contents will also be detected by the sensor. However, such remixers do by their very nature give rise to pressure drops resulting in undesirable increases in fuel consumption in addition to the actual cost of the remixer. Alternatively, the flow path between particle filter and PM sensor may be lengthened by a solution involving longer pipes, but likewise at increased cost.

However, these solutions to the above problems likewise suffer from uncertainty of sensor function. Although this uncertainty may be mitigated by using more than one sensor, this still involves not only increased cost but also problems in that the sensors will deliver signals so rarely that correct function is difficult to verify, and it will also be difficult to ensure that the vehicle's emissions do not exceed prescribed levels.

As above, the PM sensor is located according to the present invention upstream of the particle filter instead of downstream, as illustrated by the sensor 222 in Fig. 2. Such problems can be reduced or completely eliminated by the method according to the invention of using the sensor situated upstream of the filter to determine whether the vehicle's emissions are below prescribed levels.

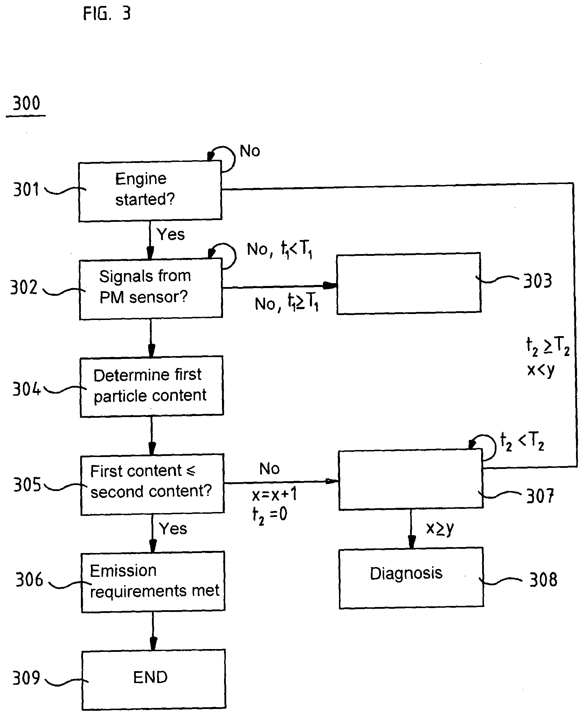

A method 300 according to the present invention for determining a particle emission is illustrated in Fig 3. In the embodiment depicted the method is implemented in the control unit 208 and begins at step 301 by determining whether the vehicle's engine 101 has been started. If it has, the method moves on the step 302, otherwise it stays at step 301 or ends.

Step 302 determines whether signals are being received from the PM sensor 202. The method stays at step 202 until sensor signals are received but not beyond the time when a timer t₁ reaches a time T₁. If no sensor signals are received before the counter reaches T₁, which may for example be part of a second or a suitable number of seconds, the method can move on to a step 303 for diagnosis of the sensor, see below. If, on the contrary, sensor signals are received within time T₁, the method moves on to step 304 for determination of a particle content of the exhaust flow.

Step 304 determines a first particle content on the basis of the signals delivered by the PM sensor 222. As the determination is by means of a PM sensor situated upstream of the particle filter 202, a continuous flow of particles will be continually passing the sensor when the engine is in operation.

This also means that the particle content at the PM sensor 222 will be substantially greater than downstream of the filter, and the sensor's measurements according to the present invention will result in the delivery of a continuous signal. This signal will be delivered more quickly, since the higher particle content means that the smallest amount of particles required for the sensor to indicate their presence will be reached more quickly. The signal will also indicate a higher amount of particles, making both size determination and diagnosis easier.

As well as the PM sensor 222 being situated in an environment where the exhaust flow has a higher particle content, its location upstream of the particle filter affords the further advantage of allowing it to be in a well-mixed and homogenous exhaust flow and thus be able to take measurements in a representative part of the exhaust flow. In the embodiment depicted, the PM sensor is situated upstream of both DPF 202 and DOC 205, but as exemplified below it might be at a number of different locations (but always upstream of the particle filter 202).

When a first particle content has been determined at step 304 on the basis of the signals delivered by the PM sensor, the method moves on to step 305, in which the first particle content determined is compared with a second particle content. If it is determined at step 305 that the particle content determined at step 304 is greater than said second particle content, the method moves on to step 307 for further investigation. It is for example possible for steps 301-305 to be repeated one or more times until they have been run through *y* times, and the respective number of times *x* is incremented each time the method moves to step 307. The method may for example go back to step 301 from step 307 when a timer t₂ has calculated a time T₂, e.g. a suitable number of seconds. By this procedure it is possible to determine whether the raised particle content is only temporary before dropping back below a prescribed level. If raised levels persist after said plurality of determinations, i.e. *x≥y,* the method may move on to a step 308 in order if possible to establish by diagnosis the reason for the raised contents. This diagnosis may for example be conducted by means of the diagnostic method described in the parallel Swedish patent application entitled **"METHOD AND SYSTEM FOR DIAGNOSIS OF A COMBUSTION ENGINE" ("FORFARANDE OCH SYSTEM FOR DIAGNOSTISERING AV EN FÖRBRÄNNINGSMOTOR",** application number 1151074-0) with the same inventor and filing date as the present application. Said application proposes a method for diagnosis of a combustion engine pertaining to a vehicle whereby a particle content of an exhaust flow from said engine is determined at a location upstream of a particle filter by means of a PM sensor situated upstream of the filter. Whether the engine is malfunctioning is determined on the basis of the particle content determined. The method referred to makes it possible for malfunctions to be detected at a very early stage and for suitable remedial action to be taken. Faults which would perhaps otherwise not be detected until a substantially later time, e.g. on the occasion of a workshop visit, may by means of the method described in said patent application be detected substantially earlier.

Alternatively, a service indicator may for example be set in the vehicle's control system, e.g. together with a fault code for the too high particle emissions, with a view to the vehicle being taken in for servicing as soon as possible.

If said first particle content is less than said second particle content, the method moves on to step 306 at which it is determined that the vehicle's emission levels are below the prescribed levels applicable to the vehicle. On the basis of said first particle content determined it is thus possible to determine whether the particle content of the exhaust flow downstream of said particle filter fulfils a defined condition, e.g. that it is less than said second particle content. The method then ends at step 309.

Said second particle content may for example be the highest particle content which the vehicle is permitted to release by prevailing regulations, and may therefore be different for different vehicles, but also different for similar vehicles running in different jurisdictions which have different particle emission requirements. Emissions are usually standardised with respect to a specific running cycle, and said second particle content may for example be determined by the permissible amount of particles per kWh of work performed by the engine, i.e. the more work the engine performs, the greater the emissions allowed in the exhaust flow. Emission requirements are often expressed in particle mass per unit of engine work, e.g. kg/kWh, g/kWh or mg/kWh, and this engine work may for example take the form of power output developed or deliverable.

This second particle content may however also be a content higher than prevailing requirements.

Said second particle content may thus depend on various parameters and may for example be determined at step 305 as a function of one or more from among pressure before and after the particle filter, differential pressure across the filter, time, exhaust temperature and exhaust flow, such data possibly being for example used to determine a second particle content which meets prevailing emission requirements.

Many engines from various manufacturers currently release too high a particle content from their combustion to enable them able to meet requirements about the presence of particles without post-treatment by means of particle filters. However, there are engines, e.g. at least certain engines made for example by Scania, which have such good combustion that the resulting emissions of particles meet requirements with regard to PM emissions even before the exhaust flow reaches the particle filter. In such engines the filter is thus used to render the exhaust flow still cleaner.

It is therefore possible as above for said second particle content at step 305 to represent a statutory emission level for engines in which prescribed emission levels can be maintained even before particle filtration. Determining that the particle mass even before the particle filter is below statutory level means that the particle content after DPF will automatically also be kept below statutory level even if DPF malfunctions.

The invention makes it possible to monitor that requirements about particle emissions after the particle filter are complied with without any need for actual measurement of particle content after the filter.

In the case of engines which cannot meet particle emission requirements without downstream filter treatment, said second particle content may be a value higher than prevailing requirements.

According to the invention, the second particle content is set with respect to the filter's cleaning capacity, which may for example be determined theoretically or be measured. Said second particle content may thus be set to a level which, despite being higher than prescribed requirements, still provides assurance that the particle content actually leaving the vehicle will still be below prescribed levels.

Particles separated from the exhaust flow by means of the particle filter accumulate in the filter, which will thus fill with soot over time. Depending for example on current running conditions, the driver's mode of driving and the vehicle's load, a larger or smaller amount of soot particles will be generated and the filter will fill with soot/particles more or less quickly. When it reaches a certain level, the filter has to be "emptied", which is done by so-called regeneration, which will be familiar to one skilled in the art. However, the filter's cleaning capacity may vary with how full it is, so said second particle content in one embodiment may also be arranged to vary with the filter's fullness, which may for example be determined on the basis of signals from a pressure sensor 209 which measures the differential pressure across the filter. The fuller the filter becomes, the greater will be the pressure difference across it. In one embodiment said second particle content may therefore be arranged to depend on the differential pressure across the filter in that it may be arranged to decrease in step with increasing differential pressure.

In the method described above, particle emissions are approved on the basis of a single value. In one embodiment, a plurality of values are instead determined for said first particle content and may then be combined to arrive at an average value which is compared with said second particle content. In this embodiment, individual values may be allowed to exceed said second particle content so long as their combined value is less than said second particle content. The method illustrated in Fig. 3 may also be repeated at certain intervals, e.g. once per second, once per minute or at some other shorter or longer suitable interval.

The present invention thus makes it possible to monitor that requirements concerning particle emissions after the particle filter are met without having to actually measure the particle content after the filter, even on engines where the particle content of the exhaust flow upstream of the filter does not meet prevailing requirements.

Locating the PM sensor upstream of the particle filter to monitor emission requirements has further advantages. Since the sensor is so situated that measurement signals will be continually delivered, its function may be verified by observing the signal delivered by it over time. So long as it delivers substantially continuous signals, or delivers for similar operating situations substantially the same signal, the sensor may be regarded as working properly. If on the contrary it suddenly indicates substantially lower emissions than normal for a given running situation, it may be assumed that the sensor is malfunctioning, and a service flag may for example be activated in the vehicle's control system to indicate a need for servicing.

The sensor may for example be of a type which delivers for example a voltage or current or presents a capacitance, inductance or resistance which varies with the presence of particles, in which case the control unit 208 may then use appropriate mathematical relationships or a table to convert measured values received to corresponding particle contents. The sensor may however also be of a type with its own control logic, in which case this internal control logic will calculate a content which is then conveyed to the control unit, e.g. via the vehicle network or a dedicated cable.

The sensor may also be used to detect situations where the particle content of the exhaust flow suddenly exceeds a normal level or a regulation level. Even if the particle filter itself often provides assurance that requirements concerning actual emissions in the vehicle's surroundings are still complied with, the higher particle content nevertheless indicates that the engine is not fully functional, which is another situation where it is desirable that the vehicle come in for servicing as soon as possible to rectify the cause or causes of the increased particle content in the exhaust gases. This is described in more detail in the aforesaid parallel patent application entitled **"METHOD AND SYSTEM FOR DIAGNOSIS OF A COMBUSTION ENGINE" ("FORFARANDE OCH SYSTEM FOR DIAGNOSTISERING AV EN FÖRBRÄNNINGSMOTOR").**

The present invention affords the further advantage that active testing of sensor function can be performed. The engine may for example be deliberately set to operating points which may be expected to result in substantially higher particle emissions. By observing at the same time the signals delivered by the sensor, it can be determined whether they actually reflect the expected increase in the particle content of the exhaust flow. So long as expected changes in its signal occur, the sensor may also be assumed to be working properly. If the signals do not increase despite the increased particle emissions due to the running situation, the sensor may be assumed to be malfunctioning.

As previously mentioned, locating the PM sensor 222 upstream of the particle filter affords also the advantage that it can with greater certainty be so situated as to cause its signals to be representative of the exhaust flow produced by the engine. The sensor may for example be situated, as in Fig. 2, after a turbo unit 220 from which the exhaust flow is usually delivered in a predictable way. It may for example also be situated downstream of DOC 205 but upstream of the particle filter 202. In the embodiment depicted, the SCR catalyst 203 is downstream of the particle filter, but in one embodiment it is instead upstream of DPF 202, in which case the sensor may be downstream or upstream of the catalyst.

The vehicle may also be equipped with a so-called exhaust brake which the sensor 222 may for example be upstream of. It may also be situated in the EGR feedback of part of the exhaust flow as is commonly the case in vehicles of the above kind, since this part of the exhaust flow is representative of the composition of the total exhaust flow. The sensor 222 may for example also be situated upstream of the turbo unit 220. The turbo unit may be of the type with fixed geometry (FGT) or of the type with variable geometry (VGT) and be provided with turbines to feed power back to crankshafts (turbo compound) or some other part of the power train. The vehicle may also be provided with a so-called ammonia slip catalyst (ASC) which the PM sensor may be situated upstream or downstream of. There are thus a large number of possible locations for the PM sensor upstream of the particle filter.

Moreover, said second particle content has hitherto been referred to in relation to various requirements, but it may also be set, e.g. in jurisdictions where there are no regulatory requirements, to a value determined by the vehicle's manufacturer. It may for example be based on a value which provides assurance of good engine function.

Moreover, the present invention is exemplified above in relation to vehicles. The invention is nevertheless also applicable to any other means of transport/processes in which particle filter systems as above are applicable, e.g. watercraft or aircraft with combustion processes as above.

Further embodiments of the method and system according to the invention are referred to in the attached claims.

It should also be noted that the system may be modified according to different embodiments of the method according to the invention (and vice versa) and that the present invention is in no way restricted to the embodiments described above of the method according to the invention, but relates to and comprises all embodiments within the protective scope of the attached independent claims.

## Claims

1. A method for determination of particle emissions pertaining to a combustion engine, such that a post-treatment system (200) comprising at least one particle filter (202) is provided to post-treat an exhaust flow arising from combustion in said combustion engine (101), which method is **characterised by**
- using a PM sensor (222) situated upstream of said particle filter (202) to determine, at a location upstream of said particle filter (202), a first particle content of said exhaust flow arising from said engine (101), and
- using said first particle content determined as a basis for determining, without having to measure the particle content downstream of said filter (202), whether a particle content of said exhaust flow downstream of said particle filter (202) fulfils a first condition,
where said particle content released after said particle filter (202) fulfils said first condition when said first particle content is less than a second particle content, said second particle content being set with respect to the cleaning capacity of the particle filter.

2. A method according to claim 1, in which said second particle content is a maximum permissible particle emission for said engine.

3. A method according to claim 1 or 2, in which said particle contents are determined as any of the following:
- a number of particles or a particle mass per unit volume;
- a number of particles or a particle mass per unit time;
- a number of particles or a particle mass per work performed.

4. A method according to any one of claims 1-3, in which said first condition depends on the engine's work.

5. A method according to any one of claims 1-4, in which said first condition depends on how full the particle filter (202) is.

6. A method according to claim 5, in which said particle content of said exhaust flow downstream of said particle filter (202) fulfils said first condition when said first particle content is less than a second particle content which changes with increasing fullness of the filter.

7. A method according to any one of claims 1-6, in which said first condition depends on a differential pressure across the particle filter (202).

8. A method according to any one of claims 1-7, in which a first particle content of said exhaust flow arising from said engine (101) is determined at a location upstream of said particle filter (202) at a plurality of times, and
- the particle content of said exhaust flow downstream of said particle filter (202) fulfils said first condition when a combined value of the particle content determinations pertaining to said plurality of times fulfils said first condition.

9. A method according to any one of claims 1-8, which further comprises determining a function of said PM sensor on the basis of a signal delivered by it which represents a particle content of said exhaust flow.

10. A method according to claim 9, in which said function is determined on the basis of variations in said sensor signal.

11. A method according to claim 9 or 10, further comprising
- controlling the particle content delivered by said engine by controlling the engine, e.g. by controlling at least one from among fuel supply, EGR supply and air supply for said combustion, and
- determining whether the signal delivered by said PM sensor corresponds to an expected sensor signal.

12. A method according to any one of claims 9-11, comprising generating a signal which indicates malfunction of said PM sensor when the signal delivered by it does not correspond to expected sensor signals.

13. A computer program which comprises program code and which, when said program code is executed in a computer, causes said computer to apply the method according to any one of claims 1-12.

14. A computer program product comprising a computer-readable medium and a computer program according to claim 13, which program is contained in said computer-readable medium.

15. A system for determination of particle emissions pertaining to a combustion engine, such that a post-treatment system (200) comprising at least one particle filter (202) is provided to post-treat an exhaust flow arising from combustion in said combustion engine (101), **characterised in that** the system comprises
- means for using a PM sensor (222) situated upstream of said particle filter (202) to determine, at a location upstream of said particle filter (202), a first particle content of said exhaust flow arising from said engine (101), and
- means for using said first particle content determined as a basis for determining, without having to measure the particle content downstream of said filter (202), whether a particle content of said exhaust flow downstream of said particle filter (202) fulfils a first condition,
wherein said particle content released after said particle filter (202) fulfils said first condition when said first particle content is less than a second particle content, said second particle content being set with respect to the cleaning capacity of the particle filter.

16. A vehicle (100) **characterised by** being provided with a system according to claim 15.

## Patentansprüche

1. Verfahren zur Bestimmung von einen Verbrennungsmotor betreffenden Partikelemissionen, wobei ein Nachbehandlungssystem (200) mit wenigstens einem Partikelfilter (202) vorgesehen ist, um einen aus einer Verbrennung in dem Verbrennungsmotor (101) stammenden Abgasstrom nachzubehandeln, wobei das Verfahren **gekennzeichnet ist durch**
- Verwenden eines stromaufwärts des Partikelfilters (202) angeordneten Partikelsensors (222), um an einer Stelle stromaufwärts des Partikelfilters (202) einen ersten Partikelgehalt des von dem Motor (101) stammenden Abgasstroms zu bestimmen, und
- Verwenden des bestimmten ersten Partikelgehalts als eine Basis zur Bestimmung, ohne den Partikelgehalt stromabwärts des Filters (202) messen zu müssen, ob ein Partikelgehalt des Abgasstroms stromabwärts des Partikelfilters (202) eine erste Bedingung erfüllt,
wobei der nach dem Partikelfilter (202) freigesetzte Partikelgehalt die erste Bedingung erfüllt, wenn der erste Partikelgehalt kleiner als ein zweiter Partikelgehalt ist, wobei der zweite Partikelgehalt mit Bezug auf die Reinigungskapazität des Partikelfilters eingestellt ist.

2. Verfahren nach Anspruch 1, bei dem der zweite Partikelgehalt eine maximal zulässige Partikelemission für den Motor ist.

3. Verfahren nach Anspruch 1 oder 2, bei dem die Partikelgehalte bestimmt werden als jedes beliebige der folgenden:
- eine Partikelanzahl oder eine Partikelmasse pro Volumeneinheit,
- eine Partikelanzahl oder eine Partikelmasse pro Zeiteinheit,
- eine Partikelanzahl oder eine Partikelmasse bezogen auf geleistete Arbeit.

4. Verfahren nach einem der Ansprüche 1 bis 3, bei dem die erste Bedingung von der Arbeit des Motors abhängig ist.

5. Verfahren nach einem der Ansprüche 1 bis 4, bei dem die erste Bedingung davon abhängig ist, wie voll der Partikelfilter (202) ist.

6. Verfahren nach Anspruch 5, bei dem der Partikelgehalt des Abgasstroms stromabwärts des Partikelfilters (202) die erste Bedingung erfüllt, wenn der erste Partikelgehalt kleiner ist als ein zweiter Partikelgehalt, der sich mit zunehmender Sättigung des Filters ändert.

7. Verfahren nach einem der Ansprüche 1 bis 6, bei dem die erste Bedingung von einem Differenzdruck über den Partikelfilter (202) abhängig ist.

8. Verfahren nach einem der Ansprüche 1 bis 7, bei dem ein erster Partikelgehalt des von dem Motor (101) stammenden Abgasstroms an einer Stelle stromaufwärts des Partikelfilters (202) mehrere Male bestimmt wird, und
- der Partikelgehalt des Abgasstroms stromabwärts des Partikelfilters (202) die erste Bedingung erfüllt, wenn ein kombinierter Wert der die mehreren Male betreffenden Partikelgehaltbestimmungen die erste Bedingung erfüllt.

9. Verfahren nach einem der Ansprüche 1 bis 8, das ferner umfasst ein Ermitteln einer Funktion des Partikelsensors basierend auf einem von ihm gelieferten Signal, das einen Partikelgehalt des Abgasstroms repräsentiert.

10. Verfahren nach Anspruch 9, bei dem die Funktion basierend auf Änderungen des Sensorsignals ermittelt wird.

11. Verfahren nach Anspruch 9 oder 10, ferner umfassend
- Steuern des von dem Motor abgegebenen Partikelgehalts durch Steuern des Motors, z. B. durch Steuern einer Kraftstoffzufuhr und/oder einer Abgasrückführungszufuhr und/oder einer Luftzufuhr für die Verbrennung, und
- Feststellen, ob das von dem Partikelsensor gelieferte Signal einem erwarteten Sensorsignal entspricht.

12. Verfahren nach einem der Ansprüche 9 bis 11, umfassend ein Erzeugen eines Signals, das eine Fehlfunktion des Partikelsensors angibt, wenn das von ihm gelieferte Signal nicht mit erwarteten Sensorsignalen übereinstimmt.

13. Computerprogramm, das einen Computercode enthält und das, wenn der Computercode in einem Computer ausgeführt wird, den Computer dazu veranlasst, das Verfahren nach einem der Ansprüche 1 bis 12 anzuwenden.

14. Computerprogrammprodukt, das ein computerlesbares Medium und ein Computerprogramm nach Anspruch 13 enthält, wobei das Programm auf dem computerlesbaren Medium enthalten ist.

15. System zur Bestimmung von einen Verbrennungsmotor betreffenden Partikelemissionen, wobei ein mindestens einen Partikelfilter (202) umfassendes Nachbehandlungssystem (200) vorgesehen ist, um einen aus einer Verbrennung in dem Verbrennungsmotor (101) stammenden Abgasstrom nachzubehandeln,
**dadurch gekennzeichnet, dass** das System aufweist
- eine Einrichtung zum Verwenden eines stromaufwärts des Partikelfilters (202) angeordneten Partikelsensors (222), um an einer Stelle stromaufwärts des Partikelfilters (202) einen ersten Partikelgehalt des von dem Motor (101) stammenden Abgasstroms zu bestimmen, und
- eine Einrichtung zum Verwenden des bestimmten ersten Partikelgehalts als eine Basis zur Bestimmung, ohne den Partikelgehalt stromabwärts des Filters (202) messen zu müssen, ob ein Partikelgehalt des Abgasstroms stromabwärts des Partikelfilters (202) eine erste Bedingung erfüllt,
wobei der nach dem Partikelfilter (202) freigesetzte Partikelgehalt die erste Bedingung erfüllt, wenn der erste Partikelgehalt kleiner ist als ein zweiter Partikelgehalt, wobei der zweite Partikelgehalt mit Bezug auf die Reinigungskapazität des Partikelfilters eingestellt ist.

16. Fahrzeug (100), **dadurch gekennzeichnet, dass** es mit einem System nach Anspruch 15 ausgestattet ist.

## Revendications

1. Procédé pour la détermination d'émissions de particules d'un moteur à combustion, de telle sorte qu'un système de traitement ultérieur (200) comprenant au moins un filtre à particules (202) est fourni pour le traitement ultérieur d'un flux d'échappement provenant de la combustion dans ledit moteur à combustion (101, ledit procédé étant **caractérisé par**
- l'utilisation d'un capteur de particules (222) situé en amont dudit filtre à particules (202) pour déterminer, à un emplacement en amont dudit filtre à particules (202), une première teneur en particules dudit flux d'échappement provenant dudit moteur (101), et
- l'utilisation de ladite première teneur en particules déterminée comme une base pour la détermination, sans devoir mesurer la teneur en particules en aval dudit filtre (202), si une teneur en particules dudit flux d'échappement en aval dudit filtre à particules (202) remplit une première conditions,
où ladite teneur en particules libérées après ledit filtre à particules (202) remplit ladite première condition lorsque ladite première teneur en particules est inférieure à une deuxième teneur en particules, ladite deuxième teneur en particules étant définie par rapport à la capacité de nettoyage du filtre à particules.

2. Procédé selon la revendication 1, dans lequel ladite deuxième teneur en particules est une émission de particules maximale admissible pour ledit moteur.

3. Procédé selon la revendication 1 ou 2, dans lequel lesdites teneurs en particules sont déterminées comme un quelconque des suivants :
- un nombre de particules ou une masse de particules par unité de volume ;
- un nombre de particules ou une masse de particules par unité de temps ;
- un nombre de particules ou une masse de particules par travail effectué.

4. Procédé selon l'une quelconque des revendications 1 à 3, dans lequel ladite première condition dépend du travail du moteur.

5. Procédé selon l'une quelconque des revendications 1 à 4, dans lequel ladite première condition dépend du niveau de remplissage du filtre à particules (202).

6. Procédé selon la revendication 5, dans lequel ladite teneur en particules dudit flux d'échappement en aval dudit filtre à particules (202) remplit ladite première condition lorsque ladite première teneur en particules est inférieure à une deuxième teneur en particules qui change avec l'augmentation du niveau de remplissage du filtre.

7. Procédé selon l'une quelconque des revendications 1 à 6, dans lequel ladite première condition dépend d'une pression différentielle à travers le filtre à particules (202) .

8. Procédé selon l'une quelconque des revendications 1 à 7, dans lequel une première teneur en particules dudit flux d'échappement provenant dudit moteur (101) est déterminée à un emplacement en amont dudit filtre à particules (202) à une pluralité de fois, et
- la teneur en particules dudit flux d'échappement en aval dudit filtre à particules (202) remplit ladite première condition lorsqu'une valeur combinée des déterminations de la teneur en particules de ladite pluralité de fois remplit ladite première condition.

9. Procédé selon l'une quelconque des revendications 1 à 8, qui comprend en outre la détermination d'une fonction dudit capteur de particules sur la base d'un signal délivré par celui-ci qui représente une teneur en particules dudit flux d'échappement.

10. Procédé selon la revendication 9, dans lequel ladite fonction est déterminée sur la base de variations dudit signal de capteur.

11. Procédé selon la revendication 9 ou 10, comprenant en outre
- le contrôle de la teneur en particules délivrée par ledit moteur par le contrôle du moteur, p. ex. par le contrôle d'au moins un parmi l'approvisionnement en carburant, réapprovisionnement de RGE et l'approvisionnement en air pour ledit combustible, et
- la détermination si le signal délivré par ledit capteur de particules correspond à un signal de capteur attendu.

12. Procédé selon l'une quelconque des revendications 9 à 11, comprenant la génération d'un signal qui indique un dysfonctionnement dudit capteur de particules lorsque le signal délivré par celui-ci diffère d'un signal de capteur attendu.

13. Programme informatique qui comprend un code de programme et qui, lorsque ledit code de programme est exécuté dans un ordinateur, amène ledit ordinateur à mettre en oeuvre le procédé selon l'une quelconque des revendications 1-12.

14. Produit de programme informatique comprenant un support lisible par ordinateur et un programme informatique selon la revendication 13, lequel programme étant compris dans ledit support lisible par ordinateur.

15. Système pour la détermination d'émissions de particules d'un moteur à combustion, de telle sorte qu'un système de traitement ultérieur (200) comprenant au moins un filtre à particules (202) est fournit pour le traitement ultérieur d'un flux d'échappement provenant d'une combustion dans ledit moteur à combustion (101), **caractérisé en ce que** le système comprend
- des moyens pour l'utilisation d'un capteur de particules (222) situé en amont dudit filtre à particules (202) pour déterminer, à un emplacement en amont dudit filtre (202), une première teneur en particules dudit flux d'échappement découlant dudit moteur (101), et
- des moyens pour l'utilisation de ladite première teneur en particules déterminée comme une base pour la détermination, sans devoir mesurer la teneur en particules en aval dudit filtre (202), si une teneur en particules dudit flux d'échappement en aval dudit filtre à particules (202) remplit une première conditions,
où ladite teneur en particules libérées après ledit filtre à particules (202) remplit ladite première condition lorsque ladite première teneur en particules est inférieure à une deuxième teneur en particules, ladite deuxième teneur en particules étant définie par rapport à la capacité de nettoyage du filtre à particules.

16. Véhicule (100), **caractérisé** en étant fourni avec un système selon la revendication 15.
